# EUROPEAN PATENT SPECIFICATION

(11) **EP 3 256 648 B1**
(45) Date of publication and mention of the grant of the patent: **30.10.2019**
(21) Application number: 15763104.5
(22) Date of filing: 29.07.2015
(51) Int. Cl.: F16C 11/04, E02D 11/00

(54) **A CONNECTION ADAPTER**
ANSCHLUSSADAPTER
ADAPTATEUR DE RACCORDEMENT

(30) Priority: 10.02.2015 TR 201501580; 07.07.2015 TR 201508433
(43) Date of publication of application: 20.12.2017
(73) Proprietor: Ozkan, Aydin, 06930 Sincan / Ankara (TR)
(72) Inventor: Ozkan, Aydin, 06930 Sincan / Ankara (TR)
(74) Representative: Berkkam, Ayfer
(86) International application number: PCT/TR2015/000289
(87) International publication number: WO 2016/130097

(56) References cited:
- EP-A1- 0 496 167
- WO-A1-2013/001929

## Description

### Field of the Invention

The present invention relates a connection adapter providing the connection of jaws of every kind with vibro hammers of every strength which are used for driving and extracting of steel formed materials, profiles and steel pipes.

### Background of the Invention

Vibro hammers are mounted on parts such as steel formed pipes and profiles, and have wide application in driving and extracting these parts to and from the soil. Vibro hammers drive pipes or profiles to soil by means of their eccentric weights. In the cases, where a steel pipe should be driven into the soil, the pipe is brought in the upright position with respect to the ground plane and the vibro hammer is placed thereon, thereafter the steel pipe is pushed and thus driven into the soil by means of the force created through the vibration. There are jaws between the vibro hammer and the pipe. These jaws are attached to the material to be driven and causing, that the vibro hammer and the jaws act so, as they were one piece, whereby they act as a connection between the material and the vibro hammer. Each of the vibro hammers used nowadays has specific jaws. For a vibro hammer used currently, it is impossible to use a jaw of another vibro hammer. (Except the vibro hammers of equal strength).

The international patent application of the company DIESEKO with document number WO201301929 of the related art, relates to a vibro hammer having a jaw structure, which can move the parts in vertical and horizontal directions. In this patent application document, a hammer and driving method is explained. The vibration system with holder jaws has the capability to move between the horizontal and vertical axes.

The patent document no. EP0496167 of the company KENCHO KOBE, which is the state of art, a jaw structure is disclosed, which can be moved in horizontal and vertical axes by means of a remote control. By means of the said jaw structure is provided a freedom of movement while relocating the parts. In this patent, the jaw no. 16 is placed under the vibrator part. In the patent document, there is not any detailed information about the operation of the jaw.

### Object of the Invention

The object of the invention is to provide a connection adapter, which can be easily connected to the jaws of vibro hammers of any kind.

Another object of the present invention is to realize a connection adapter, which can provide a connection between all sorts of jaws and all sorts of hammers.

### Detailed Description of the Invention

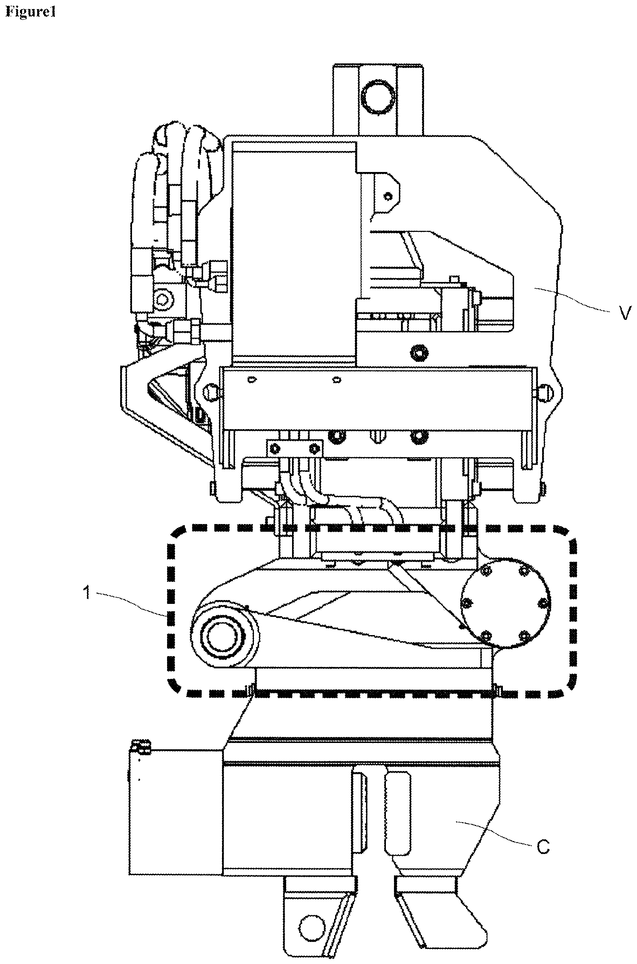

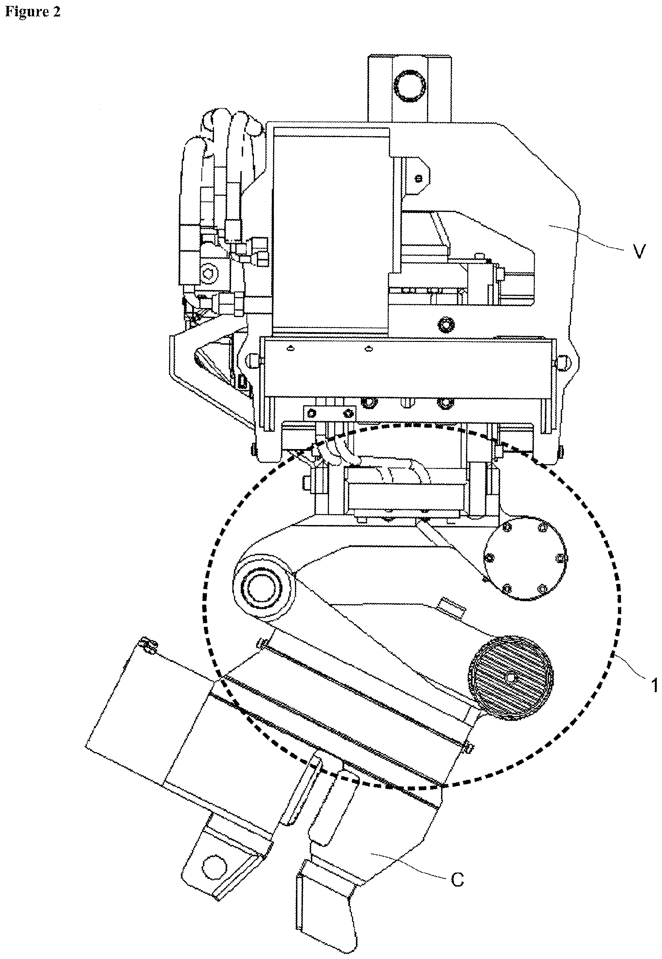

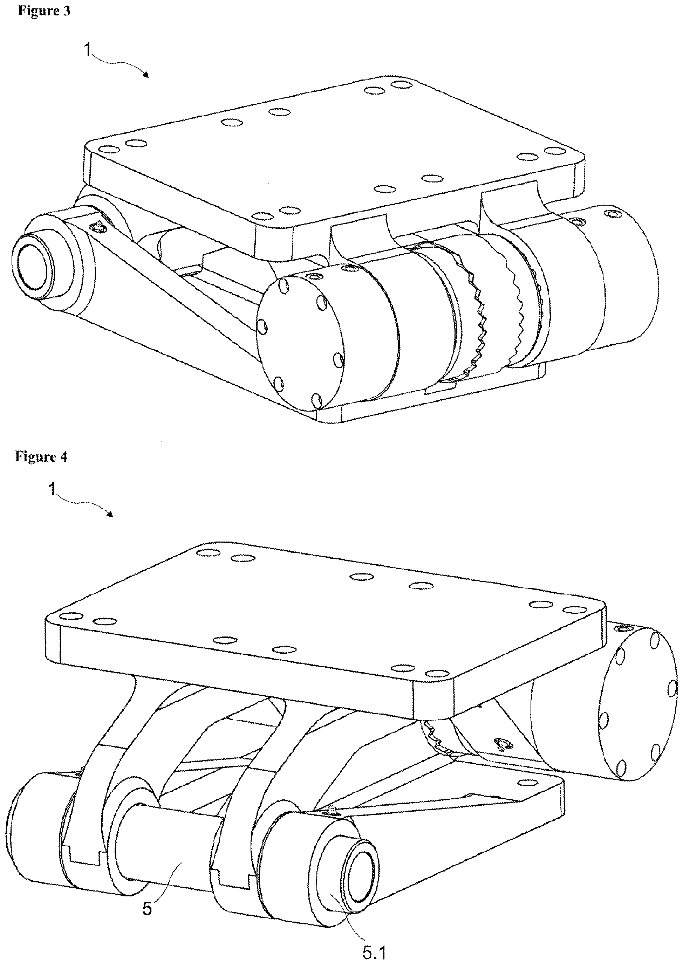

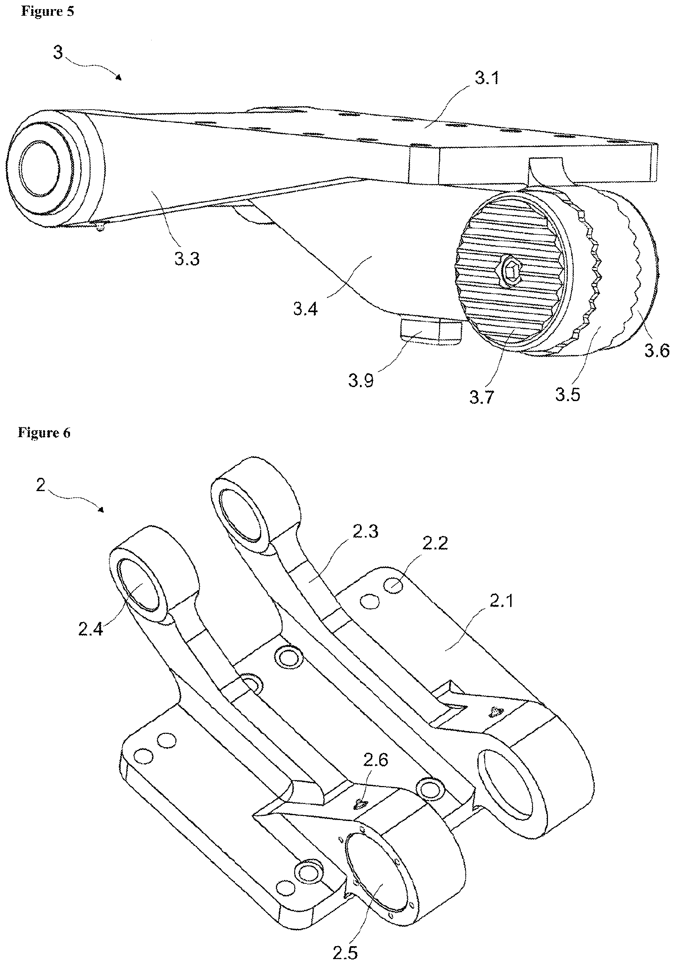

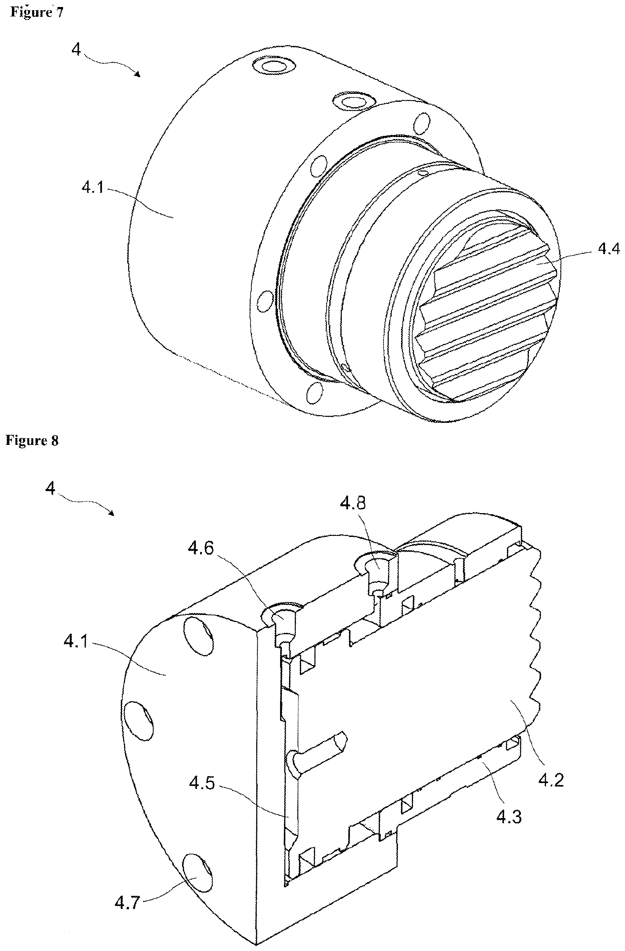

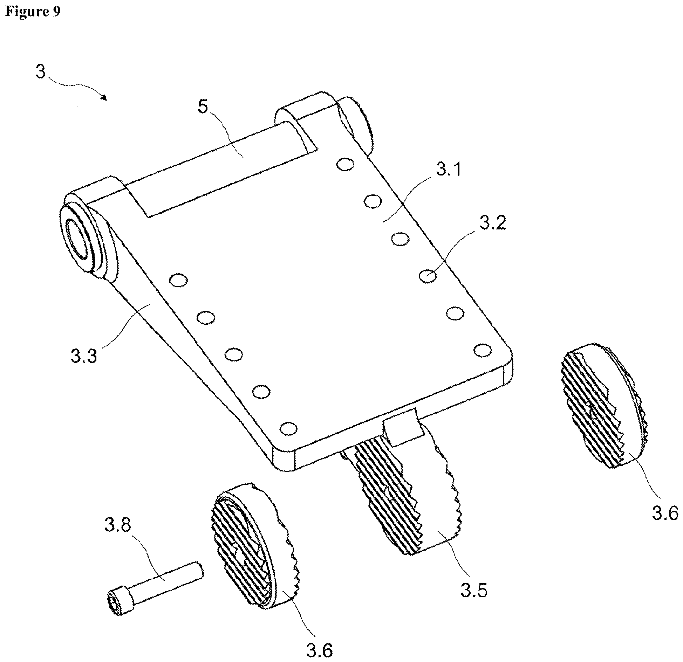

A connection adapter developed to fulfill the objectives of the present invention is illustrated in the accompanying figures, in which;
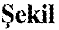 **1.** Figure 1 is a side view of the connection adapter in locked position together with the jaw and vibro hammer.
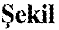 **2.** Figure 2 is a side view of the connection adapter in free (angular moved) position together with the jaw and vibro hammer.
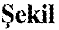 **3.** Figure 3 is a perspective view of the connection adapter.
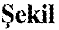 **4.** Figure 4 is a perspective view of the connection adapter from a different viewpoint.
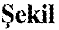 **5.** Figure 5 is a perspective view of the lower connection piece.
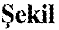 **6.** Figure 6 is a perspective view of the upper connection piece.
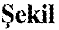 **7.** Figure 7 is the perspective view of the pressure member.
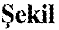 **8.** Figure 8 is a sectional view of the pressure member.
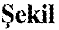 **9.** Figure 9 is an exploded perspective view of the lower connection piece from a different viewpoint.

The components shown in the figures are each given reference numbers as follows:
- **1.**: Connection adapter
- **2.**: Upper connection piece
**2.1.** Upper plate
**2.2.** Upper connection hole
**2.3.** Upper connection bracket
**2.4.** Rotator element slot
**2.5.** Fixing member slot
**2.6.** Lubrication hole
- **3.**: Lower connection piece
**3.1.** Lower plate
**3.2.** Lower connection hole
**3.3.** Lower connection bracket
**3.4.** Fixing member bracket
**3.5.** Connection apparatus
**3.6.** Shoe
**3.7.** Rib
**3.8.** Connecting element
**3.9.** Contact member
- **4.**: Pressure member
**4.1.** Body
**4.2.** Piston
**4.3.** Retaining element
**4.4.** Pressure rib
**4.5.** Space
**4.6.** Fluid hole
**4.7.** Fixing holes
**4.8.** Discharge opening
- **5.**: Spindle
**5.1.** Spindle taper
- C: Jaw
- V: Vibro hammer

The connection adapter (1), which provides the connection of jaws (C) of every kind with vibro hammers (V) of every strength, which are used for driving and extracting of steel formed materials, profiles and steel pipes, comprising;
- at least one upper connection piece (2) mounted to the jaw (C) or to the vibro hammer (V),
- at least one lower connection piece (3) mounted to the vibro hammer (V) in the event that the upper connection piece (2) is connected to jaw (C) or mounted to jaw (C) in the event that the upper connection piece (2) is connected to the vibro hammer (V),
- at least one upper plate (2.1), one face of which contacts to the jaw (C) or to the vibro hammer (V) and the other face of which faces the lower connection piece (3), having a certain wall thickness and upper connection holes (2.2) thereon for mounting of jaw (C) or vibro hammer (V),
- at least one pressure member (4), which enables that the upper connection piece (2) and the lower connection piece (3) are interlocked by applying a force, if an interlock of the upper connection piece (2) and the lower connection piece (3) is preferred,
- at least one lower plate (3.1), one face of which contacts the jaw (C) or the vibro hammer (V) and the other face of which faces the upper connection piece (2), having a certain wall thickness and lower connection holes (3.2) thereon for mounting of jaw (C) or vibro hammer (V),
- at least one spindle (5), which is mounted so that the upper connection piece (2) and the lower connection piece (3) can move angularly to each other.

According to a connection adapter (1) in one embodiment of the invention, there is an upper connection piece (2). The upper connection piece (2) is mounted optionally to jaw (C) or to vibro hammer (V). There is provided an upper plate (2.1) on the upper connection piece (2). This upper plate (2.1) is preferably in a rectangular geometry and has a certain wall thickness. There are several upper connection holes (2.2) on the upper plate in order to mount the upper connection piece (2) to jaw (C) or to vibro hammer (V). The upper connection piece (2) is mounted to jaw (C) or to vibro hammer (V) by means of a connecting element, which is placed into these upper connection holes (2.2) and ensures that both of them act so as if they were one piece. There are several upper connection brackets (2.3) extending perpendicular to the upper plate (2.1) on the other face of the upper plate (2.1) which is not in contact with the jaw (C) or with the vibro hammer (V). The upper connection brackets (2.3) extend parallel to each other, whereas they are placed symmetrical to each other and equally to the centre of the upper plate (2.1). There are rotator element slots (2.4) drilled respectively on each one of the upper connection brackets (2.3) in order to dispose the spindle (5) thereto and the centerlines of which are congruent. The spindle (5) is disposed into these rotator element slots (2.4). The rotator element slots (2.4) are drilled wide enough so as the spindle (5) can act quite easily. Moreover, a fixing member slot (2.5) is drilled on the upper connection brackets (2.3). The centerlines of the fixing member slots (2.5) are also coincident, whereby the pressure member (4) is placed into these fixing member slots (2.5). A lubrication hole (2.6) is drilled close to the fixing member slots (2.5) in order to ensure that the pressure member (4) can move easily in these fixing member slots (2.5). The pressure member (4) can act easily in the fixing member slot (2.5) thanks to a lubricous movement facilitator, which is injected through the lubrication hole (2.6). Apart from the upper connection piece (2), there is also found a lower connection piece (3) on the connection adapter (1). The lower connection piece (3), if preferred, may be also mounted to the jaw (C) or to the vibro hammer (V) as in the case of the upper connection piece (2). There is also a lower plate (3.1) similarly to the upper plate (2.1) found on the lower connection piece (3), whereby several lower connection holes (3.2) are drilled into the lower plate (3.1) in order to ensure the mounting to the jaw (C) or to the vibro hammer (V). The lower plate (3.1) can also be fixed exactly to the jaw (C) or to the vibro hammer (V) by means of the connection elements passed through the lower connection holes (3.2). There is a lower connection bracket (3.3) of the lower plate (3.1), in which a hole is found, into which the spindle (5) can be placed, extending perpendicular to the lower plate (3.1) from the other face of the lower plate (3.1), which does not touch the jaw (C) or the vibro hammer (V). In addition to this, there is a fixing member bracket (3.4) on the lower plate (3.1) perpendicular to the lower plate,(3.1), found between the upper connection brackets (2.3) and extending parallel to the upper connection brackets (2.3), when the upper connection piece (2) and the lower connection piece (3) are combined. The lower connection bracket (3.3) and the fixing member bracket (3.4) are extending parallel to each other. There is a connection apparatus (3.5) at the one end of the fixing member bracket (3.4), which is formed so as to be concentric with the fixing member slot (2.5), when the connection apparatus (1) is closed. On each one of the both sides of this connection apparatus (3.5), there is a shoe (3.6). The shoe (3.6) mentioned here is preferably changeable, so as it can be replaced easily, when it should suffer a damage in any way. There are ribs (3.7) on the other side of the shoe (3.6), which does not face the connection apparatus (3.5). These ribs (3.7) are in contact with the pressure ribs (4.4) found on the pressure member (4) when a pressure is applied, and thus they increase the adherence considerably. The interlocking of the shoes (3.6) existing on both sides of the connection apparatus (3.5) is performed by means of a connecting element (3.8). Thanks to fixing of the shoes (3.6) through the connecting element (3.8), these shoes (3.6) may be easily removed and replaced always when required. On that side of the fixing member bracket (3.4), which faces the upper plate (2.1), there is a contact member (3.9). When the upper plate (2.1) and the lower plate (3.1) are in parallel to each other, in other words when the upper connection piece (2) and the lower connection piece (3) are interlocked, a pressure is applied onto the lower plate (3.1) through the contact member (3.9) and thus provided, that the upper connection piece (2) and the lower connection piece (3) can act as a single piece. That the upper connection piece (2) and the lower connection piece (3) act as a single piece, it is also provided, when the pressure member (4) applies a pressure to the shoes (3.6). The here mentioned pressure member (4) is disposed into the fixing member slot (2.5) by means of the fixing members disposed into the fixing holes (4.7), whereby a body (4.1) is formed of a piston (4.2), which is able to move back and forth in the body (4.1) and of a retaining element (4.3), which acts as a guide for the piston (4.2) during its back and forth movement. At the end of the piston (4.2), there is a pressure rib (4.4), which is connected tightly with the rib (3.7), when pressure is applied. In cases where the pressure member (4) is active, the rib (3.7) and the pressure rib (4.4) are engaged one within the other and thus providing a full resistance to any potential shear force. Further, there is a space (4.5) between the body (4.1) and the piston (4.2). A pressure is created in the said space (4.5) by means of a fluid, which is directed through the fluid hole (4.6) and the piston (4.2) is moved by means of this pressure. In the case that the piston (4.2) would be released, the fluid were directed through the discharge opening (4.8) and the piston (4.2) would be moved in the reverse direction. The spindle (5) is passed to the rotator element slot (2.4) and further into a hole found in the lower connection bracket (3.3) and then fixed by means of a spindle taper (5.1) and its motion is limited in that location where it is placed. The use and working of the connection adapter (1) is performed as follows; The upper connection piece (2) found on the connection adapter (1) can be mounted, if preferred, to the jaw (C) or it can be mounted, if preferred, to the vibro hammer (V) by means of the connection elements disposed in the upper connection holes (2.2). In addition to this, the lower connection piece (3) is mounted to the other component, namely to the jaw (C) or to the vibro hammer (V), where the upper connection piece (2) is not mounted. The lower connection piece (3) is fixed like the upper connection piece (2) was fixed. The connection of the upper connection piece (2) and the lower connection piece (3) to each other is performed solely by means of the spindle (5) while the connection adapter (1) is in the released position. The rotating point of the angular motion of the upper connection piece (2) and the lower connection piece (3) relative to each other is likewise that point, where the spindle (5) is found. When the connection adapter (1) is released, in other words in cases where the pressure member (4) does not apply pressure to the rib (3.7), the upper connection piece (2) and the lower connection piece (3) are released and they can move around that point freely, where the spindle (5) is found. In this position there is a certain angle between the upper plate (2.1) and the lower plate (3.1). Afterwards, in this position, when any component (steel formed materials, profiles and steel pipes) is placed to the jaw (C) and when this component is brought in a position perpendicular to the ground plane and made ready to be driven, then the upper plate (2.1) and the lower plate (3.1) are brought in a parallel position to each other. In the case that the upper plate (2.1) and the lower plate (3.1) are brought to a parallel position to each other, the centerline of pressure member (4) and the centerline of the rib (3.7) are getting the same line and the piston (4.2) is progressed in direction of the rib (3.7) thanks to directing the fluid through the fluid hole (4.6) into the space (4.5). As a result of the progressing, the pressure rib (4.4) and the rib (3.7) are interlocked fully and are positioned so as they are able to put up a resistance against potential forces of any kind. At this stage the upper connection piece (2) and the lower connection piece (3) behave like a single piece and act as a single part against the high frequency vibrations created by the vibro hammer (V). If the connection adapter (1) is preferably released, the pressure force created at the pressure member (4) is removed and as the connection between the upper connection piece (2) and the lower connection piece (3) is reduced to just a point, the angular free motion can be restored.

## Claims

1. A connection adapter (1), which provides the connection of jaws (C) of every kind with vibro hammers (V) of every strength, which are used for driving and extracting of steel formed materials, profiles and steel pipes, **characterized by**
- at least one upper connection piece (2) mounted to the jaw (C) or to the vibro hammer (V),
- at least one lower connection piece (3) mounted to the vibro hammer (V) in the event that the upper connection piece (2) is connected to the jaw (C) or mounted to the jaw (C) in the event that the upper connection piece (2) is connected to the vibro hammer (V),
- at least one upper plate (2.1), one face of which contacts to the jaw (C) or to the vibro hammer (V) and the other face of which faces the lower connection piece (3), having a certain wall thickness and upper connection holes (2.2) thereon for mounting of jaw (C) or vibro hammer,
- at least one pressure member (4), which ensures that the upper connection piece (2) and the lower connection piece (3) are interlocked by applying a force, if an interlock of the upper connection piece (2) and the lower connection piece (3) is preferred,
- at least one lower plate (3.1), one face of which contacts the jaw (C) or the vibro hammer (V) and the other face of which faces the upper connection piece (2), having a certain wall thickness and lower connection holes (3.2) thereon for mounting of jaw (C) or vibro hammer (V),
- at least one spindle (5), which is mounted so at the upper connection piece (2) and the lower connection piece (3) can move angularly to each other.

2. Connection adapter (1) according to claim (1), **characterized by** an upper plate (2.1) which is preferably in a rectangular geometry and with a certain wall thickness and further comprising several upper connection holes (2.2) thereon in order to mount the upper connection piece (2) to jaw (C) or to vibro hammer.

3. Connection adapter (1) according to claim 1, **characterized by** several upper connection brackets (2.3) extending perpendicular to the upper plate (2.1) on the other face of the upper plate (2.1) which is not in contact with the jaw (C) or with the vibro hammer (V) and which extend parallel to each other, whereas they are placed symmetrical to each other and equally to the centre of the upper plate (2.1).

4. Connection adapter (1) according to claim 1, **characterized by** the rotator element slot (2.4) drilled respectively on each one of the upper connection brackets (2.3) in order to dispose the spindle (5) thereto and the centerlines of which are congruent and further which are drilled wide enough, so that the spindle (5) can act easily.

5. Connection adapter (1) according to claim 1, **characterized by** fixing member slots (2.5) drilled at the upper connection brackets (2.3), centerlines of which are coincident and whereby the pressure member (4) is placed herein to.

6. Connection adapter (1) according to claim 1, **characterized by** a lubrication hole (2.6) drilled close to the fixing member slots (2.5) in order to ensure that the pressure member (4) can move easily in the fixing member slots (2.5) and which enables that the pressure member (4) can act easily in the fixing member slot (2.5) thanks to a lubricous movement facilitator, which is injected through the lubrication hole.

7. Connection adapter (1) according to claim 1, **characterized by** the lower connection bracket (3.3) of the lower plate (3.1), in which a hole is found, into which the spindle (5) can be placed, extending perpendicular to the lower plate (3.1) from the other face of the lower plate (3.1), which does not touch the jaw (C) or the vibro hammer (V).

8. Connection adapter (1) according to claim 1, **characterized by** the fixing member bracket (3.4) rising perpendicular to the lower plate(3.1), found between the upper connection brackets (2.3) and extending parallel to the upper connection brackets (2.3), when the upper connection piece (2) and the lower connection piece (3) are combined and also extends parallel to lower connection bracket (3.3).

9. Connection adapter (1) according to claim 1, **characterized by** the connection apparatus (3.5) at the one end of the fixing member bracket (3.4), which is formed so as to be concentric with the fixing member slot (2.5), when the connection apparatus (1) is closed.

10. Connection adapter (1) according to claim 1, **characterized by** the shoe (3.6) on each one of the both sides of the connection apparatus (3.5) preferably changeable, so as it can be replaced easily, when it should suffer a damage in any way,

11. Connection adapter (1) according to claim 1, **characterized by** the rib (3.7) found on the other side of shoe (3.6), which does not face the connection apparatus (3.5), whereby the rib is continuously in contact with the pressure rib (4.4) found on the pressure member (4) when a pressure is applied.

12. Connection adapter (1) according to claim 1, **characterized by** the contact member (3.9) found on the that side of the fixing member (3.4), which faces the upper plate (2.1) and applying pressure onto the lower plate (3.1), when the upper plate (2.1) and the lower plate (3.1) are parallel to each other, in other words when the upper connection piece (2) and the lower connection piece (3) are interlocked.

13. Connection adapter (1) according to claim 1, **characterized by** pressure member (4) which enables, if it is active, that the rib (3.7) and the pressure rib (4.4) are engaged one within the other and having a body (4.1) which is disposed into the fixing member slot (2.5) by means of fixing members placed into the fixing holes (4.7) and also having a body (4.1) formed of a piston (4.2), which is able to move back and forth in the body (4.1) and of a retaining clement (4.3), which acts as a guide for the piston (4.2) during its hack and forth movement.

14. Connection adapter (1) according to claim 1, **characterized by** a space (4.5) between the body (4.1) and the piston (4.2) and to which a pressure is applied by means of a fluid directed from inside of the fluid hole (4.6).

15. Connection adapter (1) according to claim 1, **characterized by** the discharge opening (4.8) through which the fluid was directed and the piston (4.2) would be moved in the reverse direction if the piston (4.2) would be released.

## Patentansprüche

1. Einen Verbindungsadapter (1), der die Verbindung von Backen (C) jeder Art mit Vibrationshämmern (V) jeder Stärke ermöglicht, die zum Eintreiben und Herausziehen von Stahlumformungen, Profilen und Stahlrohren verwendet werden,
**gekennzeichnet durch**
- mindestens ein oberes Verbindungsstück (2), das an der Backe (C) oder am Vibrationshammer (V) angebracht ist,
- mindestens ein unteres Verbindungsstück (3), das an dem Vibrationshammer (V) angebracht ist, falls das obere Verbindungsstück (2) mit der Backe (C) verbunden ist, oder an der Backe (C) angebracht ist, falls das obere Verbindungsstück (2) mit dem Vibrationshammer (V) verbunden ist,
- mindestens eine obere Platte (2.1), deren eine Seite die Backe (C) oder den Vibrationshammer (V) berührt und deren andere Seite dem unteren Verbindungsstück (3) zugewandt ist, mit einer bestimmten Wandstärke und oberen Verbindungslöchern (2.2) zur Befestigung der Backe (C) oder des Vibrationshammers,
- mindestens ein Druckelement (4), das dafür sorgt, dass der obere Anschlussstutzen (2) und der untere Anschlussstutzen (3) durch Aufbringen einer Kraft verriegelt werden, wenn eine Verriegelung des oberen Anschlussstutzens (2) und des unteren Anschlussstutzens (3) bevorzugt ist,
- mindestens eine untere Platte (3.1), deren eine Seite die Backe (C) oder den Vibrationshammer (V) berührt und deren andere Seite dem oberen Verbindungsstück (2) zugewandt ist, mit einer bestimmten Wandstärke und unteren Verbindungslöchern (3.2) zur Befestigung der Backe (C) oder des Vibrationshammers (V),
- mindestens eine Spindel (5), die so gelagert ist, dass sich das obere Verbindungsstück (2) und das untere Verbindungsstück (3) winklig zueinander bewegen können.

2. Verbindungsadapter (1) nach Anspruch 1,
**gekennzeichnet durch**
eine obere Platte (2.1), die vorzugsweise eine rechteckige Geometrie und eine bestimmte Wandstärke aufweist und ferner mehrere obere Verbindungslöcher (2.2) aufweist, um das obere Verbindungsstück (2) an der Backe (C) oder am Vibrationshammer zu befestigen.

3. Verbindungsadapter (1) nach Anspruch 1,
**gekennzeichnet durch**
mehrere obere Verbindungswinkel (2.3), die sich senkrecht zur oberen Platte (2.1) auf der anderen Seite der oberen Platte (2.1) erstrecken, die weder mit der Backe (C) noch mit dem Vibrationshammer (V) in Kontakt stehen und sich parallel zueinander erstrecken, wobei sie symmetrisch zueinander und gleichmäßig zur Mitte der oberen Platte (2.1) angeordnet sind.

4. Verbindungsadapter (1) nach Anspruch 1,
**dadurch gekennzeichnet,**
**dass** der Rotatorelementschlitz (2.4) jeweils in eine der oberen Verbindungsklammern (2.3) gebohrt ist, um die Spindel (5) daran anzuordnen, und deren Mittellinien kongruent sind und die weiter breit genug gebohrt sind, so dass die Spindel (5) leicht handeln betrieben werden kann.

5. Verbindungsadapter (1) nach Anspruch 1,
**dadurch gekennzeichnet,**
**dass** Befestigungselementschlitze (2.5) an den oberen Verbindungsklammern (2.3) gebohrt sind, deren Mittellinien zusammenfallen und in die das Druckelement (4) eingesetzt ist.

6. Verbindungsadapter (1) nach Anspruch 1,
**gekennzeichnet durch**
ein Schmierloch (2.6), das in der Nähe der Befestigungselementschlitze (2.5) gebohrt ist, um sicherzustellen, dass sich das Druckelement (4) leicht in den Befestigungselementschlitzen (2.5) bewegen kann, und das es dem Druckelement (4) ermöglicht, dank eines Schmiermittel-Bewegungserleichterers, der durch die Schmierbohrung eingespritzt wird, leicht in den Befestigungselementschlitz (2.5) gesteckt zu werden.

7. Verbindungsadapter (1) nach Anspruch 1,
**dadurch gekennzeichnet,**
**dass** der untere Verbindungswinkel (3.3) der unteren Platte (3.1), in dem sich ein Loch befindet, in das die Spindel (5) eingesetzt werden kann, sich senkrecht zur unteren Platte (3.1) von der anderen Seite der unteren Platte (3.1) erstreckt, der weder die Backe (C) noch den Vibrationshammer (V) berührt.

8. Verbindungsadapter (1) nach Anspruch 1,
**dadurch gekennzeichnet,**
**dass** die Befestigungselementhalterung (3.4) senkrecht zur unteren Platte (3.1) ansteigt, befindet sich zwischen den oberen Verbindungsklammern (2.3) und erstreckt sich parallel zu den oberen Verbindungsklammern (2.3), wenn das obere Verbindungsstück (2) und das untere Verbindungsstück (3) kombiniert sind und sich auch parallel zum unteren Anschlusswinkel (3.3) erstrecken.

9. Verbindungsadapter (1) nach Anspruch 1,
**gekennzeichnet durch**
eine Verbindungsvorrichtung (3.5) an dem einen Ende der Befestigungselementhalterung (3.4), die so ausgebildet ist, dass sie konzentrisch zu dem Befestigungselementschlitz (2.5) ist, wenn die Verbindungsvorrichtung (1) geschlossen ist.

10. Verbindungsadapter (1) nach Anspruch 1,
**dadurch gekennzeichnet,**
**dass** der Schuh (3.6) auf jeder der beiden Seiten der Verbindungsvorrichtung (3.5) vorzugsweise austauschbar ist, so dass er leicht ausgetauscht werden kann, wenn er in irgendeiner Weise beschädigt werden sollte.

11. Verbindungsadapter (1) nach Anspruch 1,
**dadurch gekennzeichnet,**
**dass** die Rippe (3.7) auf der anderen Seite des Schuhs (3.6), die nicht der Verbindungsvorrichtung (3.5) zugewandt ist, wodurch die Rippe ständig in Kontakt mit der Druckrippe (4.4) ist, die sich auf dem Druckelement (4) befindet, wenn ein Druck ausgeübt wird.

12. Verbindungsadapter (1) nach Anspruch 1,
**dadurch gekennzeichnet,**
**dass** das Kontaktelement (3.9) sich auf der der oberen Platte (2.1) zugewandten Seite des Befestigungselements (3.4) befindet und Druck auf die untere Platte (3.1) ausübt, wenn die obere Platte (2.1) und die untere Platte (3.1) parallel zueinander sind, mit anderen Worten, wenn das obere Verbindungsstück (2) und das untere Verbindungsstück (3) miteinander verriegelt sind.

13. Verbindungsadapter (1) nach Anspruch 1,
**gekennzeichnet durch**
ein Druckelement (4), das, falls es aktiv ist, ermöglicht, dass die Rippe (3.7) und die Druckrippe (4.4) ineinander greifen und einen Körper (4.1) aufweisen, die mittels in die Befestigungslöcher (4.7) eingebrachter Befestigungselemente in dem Befestigungselementschlitz (2.5) angeordnet ist, und ferner einen Körper (4.1), der aus einem im Körper (4.1) hin- und herbeweglichen Kolben (4.2) und einem während seiner Hin- und Herbewegung als Führung für den Kolben (4.2) dienenden Halteelement (4.3), besteht.

14. Verbindungsadapter (1) nach Anspruch 1,
**gekennzeichnet durch**
einen Raum (4.5) zwischen dem Körper (4.1) und dem Kolben (4.2), auf den ein Druck mittels eines Fluids ausgeübt wird, das von der Innenseite des Fluidlochs (4.6) geleitet ist.

15. Verbindungsadapter (1) nach Anspruch 1,
**gekennzeichnet durch**
die Abgabeöffnung (4.8), durch die das Fluid geleitet wurde, und der Kolben (4.2) in die umgekehrte Richtung bewegt würde, wenn der Kolben (4.2) freigegeben würde.

## Revendications

1. Un adaptateur de connexion (1) permettant la connexion de mâchoires (C) de tout type avec des marteaux vibrants (V) de toutes résistances, étant utilisés pour l'entraînement et l'extraction de matériaux formés d'acier, de profilés et de tubes en acier, **caractérisé en ce que**
- au moins une pièce de connexion supérieure (2) monté sur la mâchoire (C) ou sur le marteau vibrant (V),
- au moins une pièce de connexion inférieure (3) montée sur le marteau vibrant (V) dans le cas où la pièce de connexion supérieure (2) est raccordée à la mâchoire (C) ou montée sur la mâchoire (C) dans le cas où la pièce de connexion supérieure (2) est connectée au marteau vibrant (V),
- au moins une plaque supérieure (2.1) dont une face est en contact avec la mâchoire (C) ou avec le marteau vibrant (V) et dont l'autre face est orientée vers la pièce de connexion inférieure (3), ayant une certaine épaisseur de paroi et des trous de connexion supérieurs (2.2) sur ceux-ci pour le montage de la mâchoire (C) ou du marteau vibrant,
- au moins un organe de pression (4), qui assure le verrouillage réciproque de la pièce de connexion supérieure (2) et de la pièce de connexion inférieure (3) en appliquant une force, si un verrouillage de la pièce de connexion supérieure (2) et de la connexion inférieure la pièce (3) est préféré,
- au moins une plaque inférieure (3.1) dont une face est en contact avec la mâchoire (C) ou le marteau vibrant (V) et dont l'autre face est tournée vers la pièce de connexion supérieure (2), ayant une certaine épaisseur de paroi et une connexion inférieure des trous (3.2) sur ceux-ci pour le montage de la mâchoire (C) ou du marteau vibrant (V),
- au moins une broche (5) étant montée de telle sorte que la pièce de connexion supérieure (2) et la pièce de connexion inférieure (3) puissent se déplacer angulairement l'une par rapport à l'autre.

2. Adaptateur de connexion (1) selon la revendication (1), **caractérisé par** une plaque supérieure (2.1) ayant de préférence une géométrie rectangulaire et une certaine épaisseur de paroi et qui comprend en outre plusieurs trous de connexion supérieurs (2.2) sur celle-ci afin de monter la pièce de connexion supérieure (2) à la mâchoire (C) ou au marteau vibrant.

3. Adaptateur de connexion (1) selon la revendication 1, **caractérisé par** plusieurs supports de connexion supérieurs (2.3) s'étendant perpendiculairement à la plaque supérieure (2.1) sur l'autre face de la plaque supérieure (2.1) qui n'est pas en contact avec la mâchoire (C) ou avec le marteau vibrant (V) et qui s'étendent parallèlement, alors qu'ils sont placés symétriquement les uns aux autres et de manière équitable au centre de la plaque supérieure (2.1).

4. Adaptateur de connexion (1) selon la revendication 1, **caractérisé en ce que** la fente d'élément rotateur (2.4) est percée respectivement sur chacun des supports de connexion supérieurs (2.3) afin de disposer la broche (5) et les lignes médianes qui sont congruentes et qui sont en outre percées suffisamment large pour que la broche (5) puisse agir facilement.

5. Adaptateur de connexion (1) selon la revendication 1, **caractérisé par** des fentes d'éléments de fixation (2.5) percées au niveau des supports de connexion supérieurs (2.3) dont les lignes centrales coïncident et dans lesquelles l'élément de pression (4) est placé dans celle-ci.

6. Adaptateur de connexion (1) selon la revendication 1, **caractérisé par** un trou de lubrification (2.6) étant percé à proximité des fentes pour les éléments de fixation (2.5) afin de garantir que l'élément de pression (4) puisse se déplacer facilement dans les fentes pour les éléments de fixation (2.5) et qui permet à l'élément de pression (4) d'agir facilement dans la fente de l'élément de fixation (2.5) grâce à un facilitateur de mouvement lubrifiant qui est injecté à travers le trou de lubrification.

7. Adaptateur de connexion (1) selon la revendication 1, **caractérisé par** le support de connexion inférieur (3.3) de la plaque inférieure (3.1), dans lequel se trouve un trou dans lequel peut être placée la broche (5), s'étendant perpendiculairement à la plaque inférieure (3.1) de l'autre face de la plaque inférieure (3.1), qui ne touche ni la mâchoire (C) ni le marteau vibrant (V).

8. Adaptateur de connexion (1) selon la revendication 1, **caractérisé par** le support de l'élément de fixation (3.4) s'élevant perpendiculairement à la plaque inférieure (3.1), situé entre les supports de connexion supérieurs (2.3) et s'étendant parallèlement aux supports de connexion supérieurs (2.3), lorsque la pièce de connexion supérieure (2) et la pièce de connexion inférieure (3) sont combinées et s'étendent parallèlement au support de connexion inférieur (3.3).

9. Adaptateur de connexion (1) selon la revendication 1, **caractérisé par** le dispositif de connexion (3.5) à l'une des extrémités du support d'élément de fixation (3.4), qui est formé de manière à être concentrique à la fente d'élément de fixation (2.5), lorsque l'appareil de connexion (1) est fermé.

10. Adaptateur de connexion (1) selon la revendication 1, **caractérisé en ce que** le patin (3.6) sur chacun des deux côtés de l'appareil de connexion (3.5) est de préférence modifiable, de manière à pouvoir être remplacé facilement, lorsqu'il devrait subir un dommage quelconque.

11. Adaptateur de connexion (1) selon la revendication 1, **caractérisé par** la nervure (3.7) située de l'autre côté du patin (3.6), ne faisant pas face à l'appareil de connexion (3.5), la nervure étant continuellement en contact avec la nervure de pression (4.4) se trouvant sur l'élément de pression (4) lorsqu'une pression est appliquée.

12. Adaptateur de connexion (1) selon la revendication 1, **caractérisé par** l'élément de contact (3.9) qui se situe du côté de l'élément de fixation (3.4), faisant face à la plaque supérieure (2.1) et qui applique une pression sur la plaque inférieure (3.1), lorsque la plaque supérieure (2.1) et la plaque inférieure (3.1) sont parallèles, c'est-à-dire lorsque l'embout supérieur (2) et l'embout inférieur (3) sont imbriqués l'un dans l'autre.

13. Adaptateur de connexion (1) selon la revendication 1, **caractérisé par** un organe de pression (4) qui permet, s'il est actif, que la nervure (3.7) et la nervure de pression (4.4) soient engagées l'une dans l'autre et ayant un corps (4.1) qui est disposé dans la fente pour élément de fixation (2.5) au moyen d'éléments de fixation placés dans les trous de fixation (4.7) et comportant également un corps (4.1) formé d'un piston (4.2), qui peut se déplacer en avant et en arrière dans le corps (4.1) et d'un élément de retenue (4.3) servant de guide au piston (4.2) lors de son mouvement en avant et en arrière.

14. Adaptateur de connexion (1) selon la revendication 1, **caractérisé par** un espace (4.5) entre le corps (4.1) et le piston (4.2) et sur lequel une pression est appliquée au moyen d'un fluide dirigé de l'intérieur du trou de fluide (4.6).

15. Adaptateur de connexion (1) selon la revendication 1, **caractérisé par** l'ouverture de décharge (4.8) à travers laquelle le fluide est dirigé et le piston (4.2) serait déplacé dans le sens inverse si le piston (4.2) était libéré.
